(19) Europäisches Patentamt
European Patent Office
Office européen des brevets

(11) **EP 2 017 643 A1**

(12) **DEMANDE DE BREVET EUROPEEN**

(43) Date de publication:
**21.01.2009 Bulletin 2009/04**

(51) Int Cl.:
*G01S 7/35* (2006.01)          *G01R 23/16* (2006.01)

(21) Numéro de dépôt: **08160623.8**

(22) Date de dépôt: **17.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **17.07.2007 FR 0705158**

(71) Demandeur: **Thales**
**92200 Neuilly sur Seine (FR)**

(72) Inventeurs:
• **De Ligny, Paul**
**78960, VOISINS LE BRETONNEUX (FR)**
• **Sperling, Raphaël**
**75015, PARIS (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(54) **Procédé d'optimisation des mesures de signaux radioélectiques**

(57) L'invention concerne un procédé d'optimisation du nombre de mesures dans le domaine fréquentiel effectué sur des signaux radioélectriques échantillonnés. Les mesures sont réalisées en sortie d'un opérateur de transformée de Fourier décomposé en N canaux. A un instant donné, sont identifiés les canaux dont la puissance du signal correspondant atteint un maximum local par rapport à la puissance du signal des canaux adjacents, les mesures étant alors limitées aux canaux ainsi identifiés et aux canaux adjacents correspondant. En particulier, l'invention s'applique aux récepteurs numériques, notamment dans le domaine de la guerre électronique.

FIG.5

**Description**

L'invention concerne un procédé d'optimisation des mesures de signaux radioélectriques. En particulier, l'invention s'applique aux récepteurs numériques, notamment dans le domaine de la guerre électronique.

Les bandes de fréquence instantanées traitées par les récepteurs numériques sont de plus en plus larges, pouvant atteindre plusieurs gigahertz, au fur et à mesure des progrès des technologies de conversion Analogique-Numérique, et plus particulièrement grâce à l'accroissement de la fréquence d'échantillonnage. En conséquence, le nombre de signaux impulsionnels présents dans la bande instantanée augmente également. Or, un récepteur numérique doit être en mesure de détecter et analyser des signaux électromagnétiques dans de larges bandes de fréquence en discriminant les signaux impulsionnels pertinents des signaux impulsionnels non pertinents, la pertinence étant quant à elle fonction de l'application pour laquelle le récepteur numérique est employé.

Pour discriminer et analyser, autrement dit mesurer les signaux présents dans une bande de fréquences instantanée B, l'opération mathématique dite « Transformée de Fourier » est généralement utilisée sur le même signal échantillonné. La transformée de Fourier est généralement précédée par l'application d'une fonction appelée fenêtre de pondération. La transformée de Fourier peut être assimilée à un banc de N filtres (un filtre étant aussi appelé canal), N étant un nombre entier fonction du nombre de points de la transformée de Fourier. Chaque filtre est notamment caractérisé par une fréquence principale donnée et un gabarit. Le gabarit dans le domaine fréquentiel est quant à lui déterminé en fonction de la fenêtre de pondération. La plupart des récepteurs numériques étant des récepteurs adaptés à une surveillance en temps réel, l'opérateur de transformée de Fourier doit être appliqué en continu sur le signal échantillonné.

Lorsqu'un signal impulsionnel à transitions rapides, c'est-à-dire des transitions dont la durée est inférieure ou égale à $\dfrac{100}{B}$ , , se présente en entrée de l'opérateur de Transformée de Fourier, l'énergie contenue dans les transitions dudit signal provoque sur le signal en sortie de l'opérateur un étalement du spectre en $\dfrac{\sin X}{X}$ . .

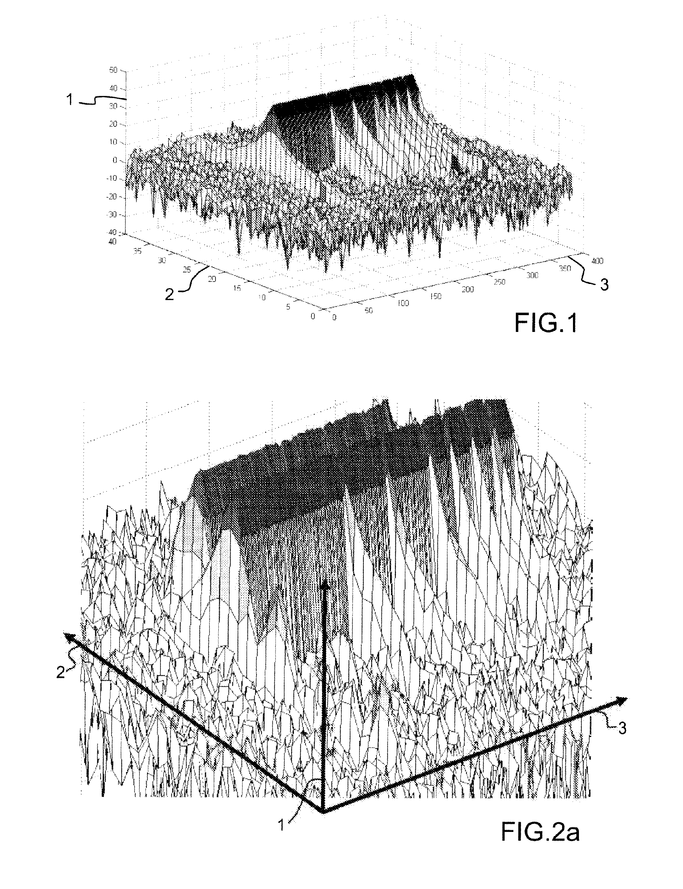

A titre d'exemple, la figure 1 illustre sur un diagramme l'étalement du spectre provoqué par les transitions rapides d'une impulsion radar modulée en phase avec un code de Barker à 13 moments reçue en entrée d'un opérateur de transformée de Fourier. Le diagramme comporte un premier axe 1 correspondant à la puissance en décibels du signal en sortie de l'opérateur, un deuxième axe 2 sur lequel chaque unité correspond à un des N filtres (N étant égal à 40 sur la figure 1) de l'opérateur de Transformée de Fourier, un troisième axe 3 correspondant au temps. L'étalement du spectre en $\dfrac{\sin X}{X}$ provoqué par les transitions rapides (fronts montant et descendant, transitions de phase) est visible en sortie de l'opérateur. Dans le cas où le récepteur numérique utilise chaque filtre dans sa fréquence principale pour observer les signaux dont la fréquence principale est dans ce filtre et effectuer des mesures, un grand nombre de signaux est détecté sur l'ensemble des N filtres de l'opérateur de Transformée de Fourier. Ainsi, le traitement de toutes ces informations peut s'avérer trop lourd pour un récepteur numérique pendant une durée donnée. A contrario, la présence de ces impulsions étant totalement conforme à la réalité physique, elle peut présenter un intérêt pour le récepteur numérique et notamment être utilisée afin de synchroniser ou de dater lesdits évènements observés dans les différents filtres de l'opérateur de Transformée de Fourier.

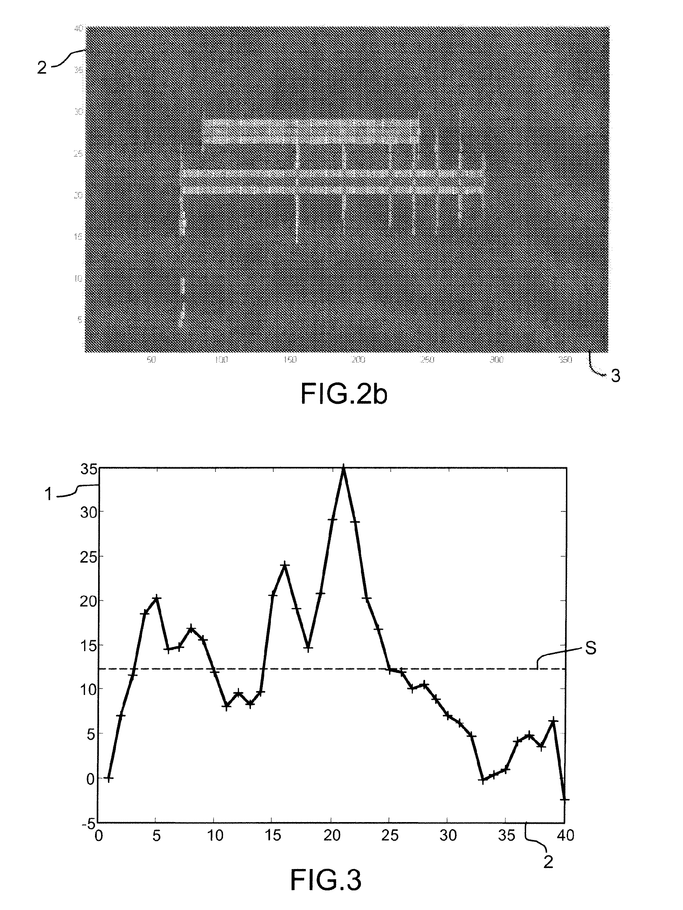

Les figures 2a et 2b illustrent sur deux diagrammes la sortie de l'opérateur de Transformée de Fourier correspondant à trois impulsions courtes et une impulsion modulée en phase par un code de Barker13, auquel s'ajoute un signal débutant avec un retard. Les éléments identiques aux éléments déjà présentés sur les autres figures portent les mêmes références. Alors que la figure 2a représente la situation sur un diagramme tridimensionnels, la figure 2b montre une projection bi-dimensionnel de la sortie de l'opérateur de Transformée de Fourier en prenant en compte des seuils S de détection pour chacun des 40 canaux en sortie de l'opérateur de Transformée de Fourier. Le nombre des mesures dans les canaux de sortie de l'opérateur de Transformée de Fourier est ici de 80 (une mesure pour chaque segment de ligne d'échantillons ayant dépassé le seuil S). Un tel scénario dépasse les capacités de traitement en temps réel des récepteurs numériques selon l'état de l'art, le nombre de mesure à réaliser par le récepteur numérique étant trop importante.

Dans un tel cas, les récepteurs numériques selon l'état de l'art, pour diminuer le nombre de mesures à réaliser, adoptent une des deux stratégies suivantes : l'élimination systématique des impulsions courtes ou l'élimination des impulsions courtes ne dépassant pas un niveau donné généralement élevé. Les récepteurs numériques selon l'état de l'art ne savent donc pas observer des impulsions courtes, à faible niveau, dont les fronts de montée sont simultanés, de transitions rapides (fronts ou sauts de phase d'autres impulsions).

L'invention a notamment pour but de pallier les inconvénients précités. A cet effet, l'invention a pour objet un procédé d'optimisation du nombre de mesures dans le domaine fréquentiel effectué sur des signaux radioélectriques échantillonnés. Les mesures sont réalisées en sortie d'un opérateur de transformée de Fourier décomposé en N canaux. A un instant donné, sont identifiés les canaux dont la puissance du signal correspondant atteint un maximum local par rapport à la puissance du signal des canaux adjacents, les mesures étant alors limitées aux canaux ainsi identifiés et aux canaux adjacents correspondant.

Dans un mode de réalisation, à un instant donné, sont identifiés les canaux dont la puissance du signal correspondant dépasse un seuil S donné et atteint un maximum local par rapport à la puissance du signal des canaux adjacents.

Dans un mode particulier de réalisation, les mesures sont limitées aux seuls canaux identifiés.

Dans un mode particulier de réalisation, le procédé selon l'invention comporte :

- une première étape (20) de recherche des canaux dont la puissance du signal correspondant atteint un maximum local par rapport à la puissance du signal des canaux adjacents ;
- une deuxième étape (30) au cours de laquelle :

    ■ si le canal ou les canaux adjacents correspondent à un maximum local, l'autorisation de mesure est accordée ;
    ■ dans le cas contraire, l'autorisation de mesure est refusée.

Le procédé comporte par exemple une étape préliminaire de comptage du nombre total de transitions des passages du seuil de détection S à un instant n, à un instant précédent n-1 et à un instant suivant n+1, à la montée comme à la descente du signal, pour chaque canal, un résultat sommé étant obtenu en additionnant les nombres totaux de transitions ainsi obtenus ;

Les canaux dont la puissance du signal correspondant atteint un maximum local par rapport à la puissance du signal des canaux adjacents sont par exemple identifiés :

- en déterminant, pour chaque canal, la valeur maximale Max_dBn par glissement temporel sur k valeurs successives de la puissance du signal correspondant ;
- en identifiant les canaux dont la valeur maximale Max_dBn est supérieure ou égale aux valeurs maximales Max_dBn-1 et Max_dBn+1 de ses deux canaux adjacents.

L'invention a notamment pour avantages qu'elle permet tout autant, selon le but recherché, de discriminer les fronts raides et décider de les éliminer que d'exploiter les impulsions correspondantes. En outre, l'invention peut être implémentée sans modification majeure sur des récepteurs numériques existants.

D'autres caractéristiques et avantages de l'invention apparaîtront à l'aide de la description qui suit faite en regard des dessins annexés qui représentent :

- la figure 1, par un diagramme, l'étalement du spectre provoqué par les transitions rapides d'une impulsion radar modulée en phase avec un code de Barker13 reçue en entrée d'un opérateur de transformée de Fourier ;

- la figure 2a et la figure 2b, par deux diagrammes, la sortie de l'opérateur de Transformée de Fourier correspondant à trois impulsions courtes et une impulsion modulée en phase par un code de Barker13, auquel s'ajoute un signal débutant avec un retard ;

- la figure 3, par un diagramme, dans le cadre du précédent scénario illustré par les figures 2a et 2b, les puissances des signaux, à l'instant où débutent les 4 impulsions simultanées vues dans les 40 canaux de la Transformée de Fourier ;

- la figure 4, par un diagramme, dans le cadre du précédent scénario illustré par les figures 2a et 2b, une projection bi-dimensionnel de la sortie de l'opérateur de Transformée de Fourier après application du procédé selon l'invention ;

- la figure 5, par un synoptique, un mode de réalisation du procédé selon l'invention.

La figure 3 montre, sur un diagramme, dans le cadre du précédent scénario illustré par les figures 2a et 2b, les puissances des signaux, à l'instant où débutent les 4 impulsions simultanées vues dans les 40 canaux de la Transformée de Fourier. Les éléments identiques aux éléments déjà présentés sur les autres figures portent les mêmes références. Le procédé selon l'invention vise à réduire le nombre de mesures à réaliser dans les canaux de sortie de l'opérateur de Transformée de Fourier tout en gardant la possibilité de traiter plusieurs impulsions débutant simultanément. Pour cela, le procédé selon l'invention, à un instant donné, identifie les canaux dont la puissance du signal correspondant atteint un maximum local par rapport à la puissance du signal des canaux adjacents. Les mesures à effectuer par le récepteur numérique sont alors limitées par le procédé selon l'invention aux canaux ainsi identifiés et éventuellement aux canaux adjacents correspondants. Le procédé selon l'invention recherche donc à chaque instant des maxima locaux de la puissance observés parmi l'ensemble des filtres en sortie de l'opérateur de Transformée de Fourier. Sur la figure 3, quatre maxima locaux sont observés au-dessus du seuil S de détection. Les quatre maxima locaux correspondent aux quatre impulsions dont les fronts de montée sont simultanés. Pour tous les canaux ayant dépassé le seuil S de détection, le procédé selon l'invention n'identifie en tant qu'impulsions que les signaux correspondant à des maxima locaux. En outre, afin de tenir compte de l'incertitude apportée dans la détermination des maxima locaux, notamment à cause de la présence de bruit thermique, des mesures peuvent également être effectuées par le récepteur numérique dans les canaux adjacents aux canaux identifiés correspondant à des maxima locaux. Le calcul d'une moyenne est également possible pour réduire cette incertitude due au bruit thermique.

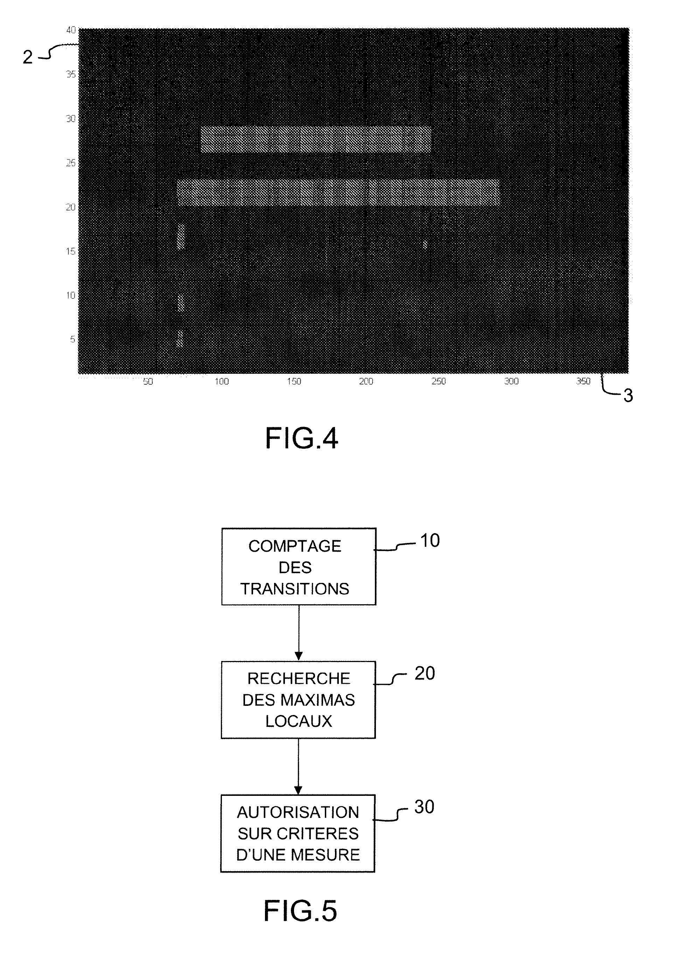

La figure 4 montre, sur un diagramme, dans le cadre du précédent scénario illustré par les figures 2a et 2b, une projection bi-dimensionnel de la sortie de l'opérateur de Transformée de Fourier après application du procédé selon l'invention. Les éléments identiques aux éléments déjà présentés sur les autres figures portent les mêmes références. Les mesures ne sont effectuées que dans les canaux correspondant aux maxima locaux identifiés par le procédé selon l'invention et éventuellement dans les canaux adjacents. Le nombre de mesures à effectuer est considérablement réduit (dans le cas présent de 80 à 14 mesures). En outre, il ne reste qu'une seule mesure parasite produite par un saut de phase du Barker13. Il serait encore possible de réduire le nombre de mesures à effectuer en ne considérant que les canaux correspondant aux maxima locaux et non les canaux adjacents.

La figure 5 illustre, par un synoptique, un exemple de mise en oeuvre du procédé selon l'invention. Les éléments identiques aux éléments déjà présentés sur les autres figures portent les mêmes références. Le procédé selon l'invention limite les mesures aux maxima locaux recherchés sur l'ensemble des filtres de l'opérateur de Transformée de Fourier.

Le procédé selon l'invention comporte par exemple une étape préliminaire 10 de comptage des transitions. Au cours de cette étape 10, le nombre total de transitions des passages du seuil de détection S, que ce soit à la montée comme à la descente, est compté à chaque instant, pour chaque canal. Puis les nombres obtenus sur trois positions temporelles distincts (par exemple celle en cours n, la précédente n-1 et la suivante n+1) sont sommés entre eux. Le résultat sommé est obtenu est noté COMPT_TRANSITION.

Le procédé selon l'invention comporte une première étape 20 de recherche des canaux dont la puissance du signal correspondant atteint un maximum local par rapport à la puissance du signal des canaux adjacents. Pour cela, par exemple, dans chaque canal, la valeur maximale Max_PdB$_n$ est calculée en glissant temporellement sur k valeurs successives (par exemple avec k=5) de la puissance :

$$Max\_PdB_n = \max(PdB_j) \text{ pour } \quad j \in \left[ n - E\left(\frac{k}{2}\right); n + E\left(\frac{k}{2}\right) \right] E$$

étant la partie entière. Les maxima locaux en transverse sur tous les canaux sont alors recherchés. Chaque canal dont la valeur maximale Max_dBn est supérieure ou égale à la valeur maximale Max_dBn de ses deux canaux adjacents est identifié comme canal dont la puissance du signal correspondant atteint un maximum local.

Le procédé selon l'invention comporte une deuxième étape 30 d'autorisation sur critères d'une mesure. Ainsi par exemple s'il y a l'étape préliminaire 10, si le résultat sommé COMPT_TRANSITION est inférieur ou égal à un entier m (par exemple m=2), c'est-à-dire qu'il n'y a pas de présomption de transition rapide, l'autorisation de mesure est accordée (le récepteur numérique effectuera donc une mesure). Dans le cas où, en cas d'utilisation de l'étape préliminaire, le résultat sommé COMPT_TRANSITION est supérieur à l'entier m, c'est-à-dire qu'il y a présomption de front raide, et par exemple dans tous les autres cas, alors pour chaque filtre :

- si le canal correspond à un maximum local ou si l'un des 2 canaux adjacents correspond à un maximum local, l'autorisation de mesure est accordée ;
- dans le cas contraire, l'autorisation de mesure est refusée.

Le procédé selon l'invention peut être mis en oeuvre par tout moyen de calcul, comme par exemple à l'aide du calculateur d'un récepteur numérique. Le procédé peut être implémenté sur des composants à logique programmable, à l'aide de composant électronique ou encore sous la forme d'un logiciel.

**Revendications**

1. Procédé d'optimisation du nombre de mesures dans le domaine fréquentiel effectué sur des signaux radioélectriques échantillonnés, les mesures étant réalisées en sortie d'un opérateur de transformée de Fourier décomposé en N canaux **caractérisé en ce que,** à un instant donné, sont identifiés les canaux dont la puissance du signal correspondant dépasse un seuil S donné et atteint un maximum local par rapport à la puissance du signal des canaux adjacents, les mesures étant alors limitées aux canaux ainsi identifiés et aux canaux adjacents correspondants.

2. Procédé selon la revendication 1 **caractérisé en ce que** les mesures sont limitées aux seuls canaux identifiés.

3. Procédé selon l'une des revendications 1 ou 2, **caractérisé en ce qu'**il comporte :

   • une première étape (20) de recherche des canaux dont la puissance du signal correspondant atteint un maximum local par rapport à la puissance du signal des canaux adjacents ;
   • une deuxième étape (30) au cours de laquelle :

   ■ si le canal ou les canaux adjacents correspondent à un maximum local, l'autorisation de mesure est accordée ;
   ■ dans le cas contraire, l'autorisation de mesure est refusée.

4. Procédé selon la revendication 3, **caractérisé en ce qu'**il comporte une étape préliminaire (10) de comptage du nombre total de transitions des passages du seuil de détection S à un instant n, à un instant précédent n-1 et à un instant suivant n+1, à la montée comme à la descente du signal, pour chaque canal, un résultat sommé étant obtenu en additionnant les nombres totaux de transitions ainsi obtenus ;

5. Procédé selon l'une quelconque des revendications 3 ou 4, **caractérisé en ce que** les canaux dont la puissance du signal correspondant atteint un maximum local par rapport à la puissance du signal des canaux adjacents sont identifiés :

   • en déterminant, pour chaque canal, la valeur maximale Max_dBn par glissement temporel sur k valeurs successives de la puissance du signal correspondant ;
   • en identifiant les canaux dont la valeur maximale Max_dBn est supérieure ou égale aux valeurs maximales Max_dBn-1 et Max_dBn+1 de ses deux canaux adjacents.

FIG.1

FIG.2a

FIG.2b

FIG.3

2

3

## FIG.4

| COMPTAGE DES TRANSITIONS | — 10 |

↓

| RECHERCHE DES MAXIMAS LOCAUX | — 20 |

↓

| AUTORISATION SUR CRITERES D'UNE MESURE | — 30 |

## FIG.5

**Office européen des brevets**

# RAPPORT DE RECHERCHE EUROPEENNE

Numéro de la demande

EP 08 16 0623

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 00/13172 A (SIGMA AUDIO RESEARCH LIMITED [NZ]; HOEK STEPHEN MARCUS JASON [NZ]) 9 mars 2000 (2000-03-09) * abrégé * ----- | 1-5 | INV. G01S7/35 G01R23/16 |
| X | FR 2 766 575 A (EUROCOPTER FRANCE [FR]) 29 janvier 1999 (1999-01-29) * abrégé; figure 1 * * page 4, ligne 1 - ligne 29 * * page 9, ligne 16 - page 10, ligne 16 * * page 20, ligne 6 - ligne 25 * ----- | 1-5 | |
| X | DE 42 42 700 A1 (BOSCH GMBH ROBERT [DE]) 23 juin 1994 (1994-06-23) * colonne 2, ligne 61 - colonne 3, ligne 5 * * colonne 4, ligne 59 - colonne 5, ligne 4 * ----- | 1-5 | |
| A | US 5 644 314 A (AHMAD FALIH H [US] ET AL) 1 juillet 1997 (1997-07-01) * le document en entier * ----- | 1-5 | DOMAINES TECHNIQUES RECHERCHES (IPC) G01S G01R |

Le présent rapport a été établi pour toutes les revendications

| Lieu de la recherche | Date d'achèvement de la recherche | Examinateur |
|---|---|---|
| Munich | 21 août 2008 | Bauer, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 08 16 0623

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-08-2008

| Document brevet cité au rapport de recherche | | Date de publication | Membre(s) de la famille de brevet(s) | | Date de publication |
|---|---|---|---|---|---|
| WO 0013172 | A | 09-03-2000 | AU | 5454899 A | 21-03-2000 |
| | | | CN | 1315033 A | 26-09-2001 |
| | | | EP | 1127349 A1 | 29-08-2001 |
| | | | JP | 2002524759 T | 06-08-2002 |
| | | | US | 6266003 B1 | 24-07-2001 |
| FR 2766575 | A | 29-01-1999 | US | 6347286 B1 | 12-02-2002 |
| DE 4242700 | A1 | 23-06-1994 | FR | 2699686 A1 | 24-06-1994 |
| | | | JP | 3457722 B2 | 20-10-2003 |
| | | | JP | 6242231 A | 02-09-1994 |
| | | | US | 5483242 A | 09-01-1996 |
| US 5644314 | A | 01-07-1997 | AUCUN | | |

EPO FORM P0460

Pour tout renseignement concernant cette annexe : voir Journal Officiel de l'Office européen des brevets, No.12/82